# EUROPÄISCHE PATENTSCHRIFT

(11) **EP 1 701 046 B1**
(45) Veröffentlichungstag und Bekanntmachung des Hinweises auf die Patenterteilung: **14.11.2007**
(21) Anmeldenummer: 06405056.0
(22) Anmeldetag: 07.02.2006
(51) Int. Cl.: F16B 13/06, F16B 13/12

(54) **Spreizdübel**
Expanding masonry attachment plug
Cheville d'écartement

(30) Priorität: 02.03.2005 CH 3762005
(43) Veröffentlichungstag der Anmeldung: 13.09.2006
(73) Patentinhaber: MUNGO BEFESTIGUNGSTECHNIK AG, CH-4603 Olten (CH)
(72) Erfinder: Bappert, Adolf, 4616 Kappel (CH)
(74) Vertreter: Quehl, Horst Max

(56) Entgegenhaltungen:
- AT-B- 325 832
- US-A- 4 142 440

## Beschreibung

Die Erfindung betrifft einen Spreizdübel aus Kunststoff mit mindestens drei, an ihren beiden Enden mit dem Dübelkörper verbundenen, zwischen sich jeweils einen Längsspalt einschliessenden Spreizschenkeln.

Spreizdübel dieser Art sind bekannt durch die CH 212 836, US 3199398, AT 325 832 und DE 2026456. Gegenüber solchen vorbekannten Spreizdübeln liegt der Erfindung die Aufgabe zugrunde, einen Spreizdübel zu finden, der eine verbesserte Verankerung auch in bröckeligem Material sowie in Hohlräume aufweisenden Baumaterialien gewährleistet und der sich mit geringerem Widerstand in ein in solchem Baumaterial vorbereitetes Loch einschieben lässt.

Die Lösung der genannten Aufgabe erfolgt bei einem Spreizdübel der eingangs genannten Art erfindungsgemäss durch die kennzeichnenden Merkmale des Patentanspruchs 1. Bevorzugte Ausführungsformen des Spreizdübels 1 sind Gegenstand der abhängigen Patentansprüche.

Im Folgenden wird die Erfindung an Hand eines in den Zeichnungen dargestellten Ausführungsbeispieles der Erfindung näher erläutert. Es zeigt:

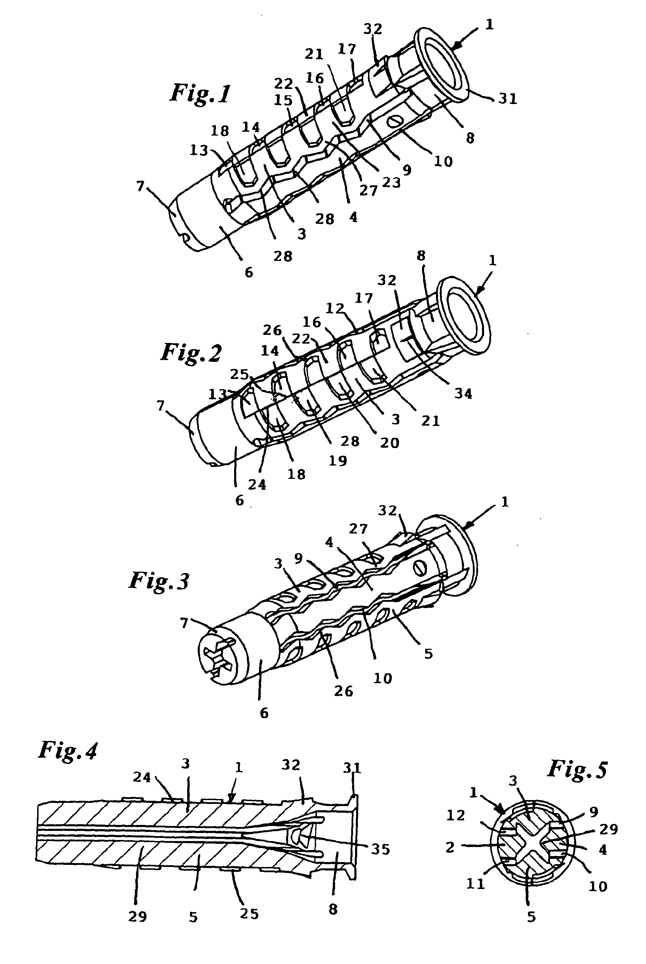

Fig.1 bis 3 perspektivische Seitenansichten des Spreizdübels unter verschiedenem Betrachtungswinkel,
Fig.4 einen Längsschnitt durch den Spreizdübel in einer die breiteren Spreizschenkel verbindenden Mittelebene,
Fig.5 einen Querschnitt durch den Spreizdübel,
Fig.6 eine einen teilweisen Längsschnitt beinhaltende Seitenansicht des in einem Aufnahmeloch verankerten Spreizdübels und
Fig.7 eine Seitenansicht eines in einem Lochziegel verspannten Spreizdübels.

Der aus Kunststoff im Spritzgiessverfahren hergestellte Spreizdübel 1 des dargestellten Ausführungsbeispieles hat vorzugsweise vier Spreizschenkel 2,3,4 und 5, die mit ihren beiden Enden am Dübelkörper angeformt sind.

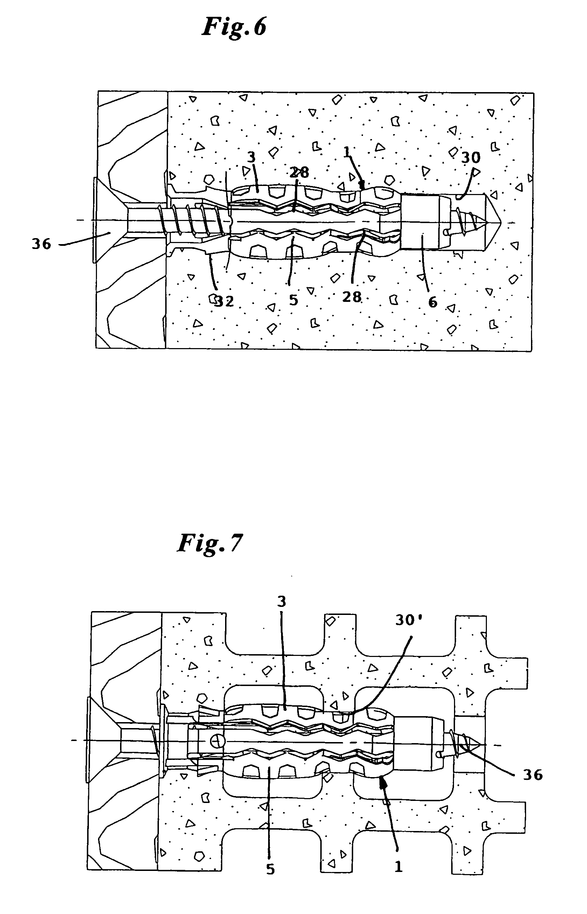

Am vorderen Dübelende enden die Spreizschenkel 2-5 in einem im Wesentlichen zylindrischen oder leicht konischen Führungsende 6, das beim Einschieben des Spreizdübels 1 in ein vorbereitetes Aufnahmeloch 30,30' (Fig.6 und 7) die anfängliche Führung übernimmt. Hierzu hat das Führungsende 6 gegenüber dem die Spreizschenkel 2-5 aufweisenden Bereich des Dübelkörpers 1 einen etwas kleineren Durchmesser und ist durch einen konischen Endrand 7 nach vorn zugespitzt.

Beim Einschrauben einer Befestigungsschraube 36 in den Spreizdübel 1 werden auf die Spreizschenkel 2-5 Kräfte ausgeübt, die zu ihrer Ausbauchung und/oder Torsion und Verknotung führen können, falls Hohlräume oder Weichstellen in der Wand eines Aufnahmelochs 30,30' vorhanden sind, in die hinein sich das verformte Dübelmaterial bewegen kann. Wenn die Schraube 36 bis zum schraubenmutterartigen Eingriff mit dem Führungsende 6 vorgedrungen ist, werden diese, eine Verformung der Spreizschenkel 2-5 bewirkenden Kräfte noch erheblich verstärkt.

Am hinteren Dübelende enden die Spreizschenkel 2-5 in einem Dübelhals 8, der je nach Anwendungsbereich des Spreizdübels 1 zur Überbrückung einer mehr oder weniger grossen Distanz dient, die zwischen der Aussenfläche eines Bauwerkes und dem für die Verankerung des Spreizdübels 1 geeigneten oder vorgesehenen Materialbereich vorhanden sein kann. Der Aussendurchmesser des Dübelhalses 8 ist ebenso wie das Führungsende 6 des Spreizdübels 1 gegenüber dem Durchmesser im Bereich der Spreizschenkel 2 bis 5 kleiner ausgeführt, so dass das Stauchen der Spreizschenkel (2-5) bei Eingriff einer sich am Dübelflansch 31 abstützenden Schraube begünstigt wird.

Zwischen sich schliessen die Spreizschenkel 2-5 jeweils einen zickzackförmig verlaufenden Längsspalt 9,10,11,12 ein, so dass ihre Längskanten einen entsprechenden zickzackförmigen Verlauf haben.

Zwei diametral zueinander angeordnete, breitere Spreizschenkel 3,5 haben ausserdem eine Aussenprofilierung, die durch zwei nebeneinander verlaufende und zueinander in Längsrichtung versetzte Reihen von Aussparungen 13 bis 17 und 18 bis 21 gebildet ist. Dabei entspricht das Mass der Längsversetzung zumindest angenähert der in Dübellängsrichtung gemessenen Breite der Aussparung und ein somit vorhandener Steg 22,23 zwischen in Längsrichtung benachbarten Aussparungen 13-17 und 18-21 bildet jeweils eine in Dübellängsrichtung verlaufende scharfe Kante 24,25, die einer Verdrehung des Spreizdübels 1 im Aufnahmeloch aufgrund der Torsionskräfte beim Einschrauben einer Befestigungsschraube 36 entgegenwirkt und eine Verankerung im Aufnahmeloch 30,30' verbessert.

Ausserdem sind die Aussparungen 13 bis 21 zur Seite der Längsspalte 9 bis 12 hin durch einen entsprechend zickzackförmig verlaufenden, Winkelrippen 26, 27 bildenden Rand begrenzt, der mit seinen Zackenspitzen 28 ein zusätzliches Verankerungsmittel des Spreizdübels 1 bildet, das durch den radial auswärts wirkenden Druck eines in den Spreizdübel eingebrachten Befestigungselementes 36 in mehreren Richtungen wirksam ist und insbesondere auch bei bauchartiger Verformung der Spreizschenkel 2-5 im Aufnahmeloch 30,30' sich in umgebendes Material gut eingraben kann.

Da die jeweils zueinander querversetzten, jedoch lückenlos, querversetzt aufeinander folgenden Stege 22,23 und die rippenartigen Rändern 26,27 der Aussparungen 13-21 sowie die im Wesentlichen aussen glatten, schmaleren Spreizschenkeln 2,4 Aussenflächen aufweisen, die jeweils Teilflächen einer gemeinsamen zylindrischen, leicht konischen oder ausgebauchten Aussenfläche des Spreizdübels 1 bilden, bzw. eine gemeinsame Hüllfläche aufweisen, lässt sich der Spreizdübel 1 mit Gleitkontakt dieser Aussenflächen der Dübelaussenkontur, lückenlos geführt leicht in ein vorbereitetes Aufnahmeloch 30,30' einschieben.

Trotz der somit lückenlos ineinander übergehenden zylindrischen Teilflächen der Aussenkontur des Spreizdübels 1 gewährleistet die besondere, stark ausgeprägte Aussenprofilierung des Spreizdübels 1 eine verbesserte Verankerung im umgebenden Material der Wandung des Aufnahmelochs 30,30'. Ausserdem ermöglicht die Aussenprofilierung der Spreizschenkel 2-5 zusammen mit ihrer zickzackförmigen, Sollbiegestellen bildenden Seitenkontur ihre leichte Verformbarkeit, um durch Verbiegung und Stauchung der Spreizschenkel 2-5 Unregelmässigkeiten der Wandstruktur des Aufnahmelochs zu folgen und die Auswölbung oder Verknotung zu begünstigen, wenn eine in den Spreizdübel 1 eingebrachte Befestigungsschraube 36 in Eingriff mit dem Führungsende 6 des Spreizdübels 1 Kräfte ausübt, die bestrebt sind die Spreizschenkel 2-5 zu stauchen und zu verdrehen. Dies ist durch die Darstellungen der Fig.6 und Fig.7 angedeutet.

Entlang der Innenseite der Spreizschenkel 2-5 verläuft jeweils achsparallel eine Eingriffsrippe 29, in die sich das Gewinde einer Befestigungsschraube einschneiden kann. Indem sich der Querschnitt der Eingriffsrippen 29 verhältnismässig weit in den inneren Hohlraum des Spreizdübels 1 erstreckt, können Befestigungsschrauben 36 mit verschiedenem Durchmesser in ihm einen Eingriff finden.

Damit sich beim Einschneiden des Gewindes einer Schraube in die Eingriffsrippen 29 der Spreizschenkel 2-5 der Spreizdübel 1 durch die dabei aufgebrachte Einschraubkraft nicht im Aufnahmeloch 30,30' mitdreht, bevor sich die Spreizschenkel 2 bis 5 im umgebenden Material verankern, ist im Bereich des hinteren Endes der breiteren Spreizschenkel 2,5 und somit mit Abstand vom endseitigen Dübelflansch 31 jeweils eine Nase 32 angeformt, die eine nach hinten ansteigende, in Umfangsrichtung gekrümmte Keilfläche bildet. Durch die beiden somit diametral zueinander angeordneten, sich über zumindest eine grösseren Teil der Breite der breiteren Spreizschenkel 3,5 erstreckenden Nasen 32 wird der Spreizdübel 1 auch im hinteren Bereich des Aufnahmelochs 30 und mit etwas Abstand vom Lochrand 33 ausreichend verspannt. Die erhebliche Breite dieser elastisch nach innen verformbaren Nasen 32 gewährleistet, dass auch in einem Aufnahmeloch 30,30' eine ausreichende Verspannung gewährleistet ist, dessen Innenfläche aufgrund geringer Festigkeit des Baumaterials grössere Unregelmässigkeiten aufweist. Für eine Verbesserung der Haftung der im Ausnahmeloch 30,30' verspannten Nasen 32, haben diese eine Aussenprofilierung, die beispielsweise aus mindestens einer nach aussen scharfkantigen Rippe 34 besteht.

Um den Spreizdübel 1 bereits vor dem Einschieben in ein Aufnahmeloch 30,30' mit einer Befestigungsschraube 36 verbinden zu können, so dass der Arbeitsablauf bei zweckbestimmter Verwendung des Spreizdübels 1 vereinfacht wird, ist im Dübelhals 8 oder dem rückseitigen Endbereich mindestens eines der Spreizschenkel 2-5 ein kurzes, für den Eingriff in das Gewinde einer Schraube 36 bestimmtes, in Umfangsrichtung des Dübels geneigtes Gewindestück 35 vorgesehen.

## Patentansprüche

1. Spreizdübel aus Kunststoff mit mindestens drei, an ihren beiden Enden mit dem Dübelkörper verbundenen, zwischen sich jeweils einen Längsspalt (9-12) einschliessenden Spreizschenkeln (2-5), **dadurch gekennzeichnet, dass** die Längsspalte (9-12) und entsprechend die Längskanten der Spreizschenkel (2-5) zickzackförmig verlaufen und mindestens zwei der Spreizschenkel (3,5) an ihrer Aussenseite Reihen von Aussparungen (13-21) aufweisen, die gegenüber den Längskanten durch einen als auswärts gerichtete Winkelrippe (26, 27) geformten Rand begrenzt sind, wobei in Umfangsrichtung benachbarte Aussparungen (13-17, 18-21) des jeweiligen Spreizschenkels (3,5) in Längsrichtung des Spreizdübels (1) zueinander versetzt angeordnet sind.

2. Spreizdübel nach Anspruch 1, **dadurch gekennzeichnet, dass** die in Längsrichtung des Spreizdübels (1) aufeinander folgenden Aussparungen (13-17, 18-21) zwischen sich einen Steg (22,23) einschliessen, dessen scharfe Längskante (24,25) eine in Umfangsrichtung benachbarte Aussparung (13-21) begrenzt.

3. Spreizdübel nach Anspruch 1 oder 2, **dadurch gekennzeichnet, dass** zwischen zwei diametral zueinander angeordneten breiteren, Aussparungen (13-21) aufweisenden Spreizschenkeln (3,5) jeweils ein schmalerer, an seiner Aussenseite weniger tief profilierter oder aussen glatter Spreizschenkel (2,4) angeordnet ist.

4. Spreizdübel nach einem der Ansprüche 1 bis 3, **dadurch gekennzeichnet, dass** an den breiteren Dübelschenkeln (3,5) jeweils eine nasenförmige, zum hinteren Dübelende hin einen Absatz bildende Erhebung (32) vorgesehen ist.

5. Spreizdübel nach einem der Ansprüche 1 bis 4, **dadurch gekennzeichnet, dass** an der Aussenseite der nasenförmigen Erhebung (32) mindestens eine in Dübellängsrichtung verlaufende, aussen eine Kante bildenden Eingriffsrippe (34) angeformt ist.

6. Spreizdübel nach einem der Ansprüche 1 bis 5, **dadurch gekennzeichnet, dass** an der Innenseite der Spreizschenkel (2-5) jeweils eine in Dübellängsrichtung verlaufende, für den Gewindeeinschnitt einer Schraube bestimmte Eingriffsrippe (29) vorgesehen ist.

7. Spreizdübel nach einem der Ansprüche 1 bis 6, **dadurch gekennzeichnet, dass** zwischen der Eingriffsrippe (29) mindestens eines der Spreizschenkel und dem hinteren, einen Flansch (31) bildenden Dübelende an der Innenwand des Dübels (1) eine für den Eingriff in das Gewinde einer Schraube bestimmtes Gewindestück (35) angeordnet ist.

8. Spreizdübel nach einem der Ansprüche 1 bis 7 , **dadurch gekennzeichnet, dass** jeweils zueinander querversetzte, lückenlos, aufeinander folgenden Stege (22,23) und die rippenartigen Rändern (26,27) der Aussparungen (13-21) sowie im Wesentlichen aussen glatte, schmalere Spreizschenkeln (2,4) eine das Einschieben des Spreizdübels (1) in eine Aufnahmeloch erleichternde, gemeinsame, zylindrische, leicht konische oder ausgebauchte Hüllfläche aufweisen.

9. Spreizdübel nach Anspruch 6, **dadurch gekennzeichnet, dass** die Spreizschenkel (2-5) durch einen winkelförmigen Querschnitt der Eingriffsrippen (29) mit diesen einen kreissektorförmigen Gesamtquerschnitt .

10. Spreizdübel nach Anspruch 9, **dadurch gekennzeichnet, dass** vier Spreizschenkel (2-9) vorhanden sind, so dass die zwischen ihnen verlaufenden Dübellängsspalte (9-12) gemeinsam einen kreuzförmigen Hohlquerschnitt bilden.

## Claims

1. Expansion plug made of plastic with minimum three expanding shanks (2-5) connected to the plug body at their two ends enclosing a longitudinal slot (9-12) between them respectively **characterised by** the fact that the longitudinal slots (9-12) and correspondingly the longitudinal edges of the expanding shanks (2-5) run zigzag-shaped and at least two of the expanding shanks (3,5) have rows of recesses (13-21) on their outside, which are bordered opposite the longitudinal edges by a rim formed as angular rib (26, 27) pointed outwards, in which adjacent recesses (13-17, 18-21) of the respective expanding shank (3,5) in the circumferential direction are arranged staggered to each other in the longitudinal direction of the expanding plug (1).

2. Expanding plug according to claim 1 **characterised by** the fact that the successive recesses (13-17, 18-21) in the longitudinal direction of the expanding plug (1) enclose a bridge (22,23) between them, whose sharp longitudinal edge (24,25) borders an adjacent recess (13-21) in circumferential direction.

3. Expanding plug according to claim 1 or 2 **characterised by** the fact that a smaller expanding shank (2,4), which is profiled less deeply on its outside or is smooth outside, is arranged respectively between two broader expanding shanks (3,5) having recesses (13-21) arranged diametricaaly opposite.

4. Expanding plug according to one of the claims 1 to 3 **characterised by** the fact that a nose-shaped elevation (32) forming a step towards the rear plug-end is provided on the wider plug shanks (3,5) respectively.

5. Expanding plug according to one of the claims 1 to 4 **characterised by** the fact that, on the outside of the nose-shaped elevation (32), at least one engaging rib (34) is formed running in the longitudinal direction of the plug forming an edge outside.

6. Expanding plug according to one of the claims 1 to 5 **characterised by** the fact that an engaging rib (29) is provided on the inner side of the expanding shanks (2-5) respectively running in the longitudinal direction of the plug determined for the thread-cutting for a screw.

7. Expanding plug according to one of the claims 1 to 6 **characterised by** the fact that a threaded piece (35) determined for the engagement in the thread of a screw is arranged between the engaging rib (29) of at least one of the expanding shanks and the rear, flange-forming (31) plug end at the inner wall of the plug (1).

8. Expanding plug according to one of the claims 1 to 7, **characterised by** the fact that uninterrupted successive bridges displaced crosswise to each other respectively (22,23) and the rib-type rims (26,27) of the recesses (13-21) as well as smaller expanding shanks (2,4), essentially smooth outside, have a common, cylindrical, slightly conical or bulged enveloping surface simplifying the insertion of the expanding plug (1) into a location hole.

9. Expanding plug according to claim 6 **characterised by** the fact that the expanding shanks (2-5), through an angular cross-section of the engaging ribs (29), form a circular sector-shaped total cross-section with these.

10. Expanding plug according to claim 9 **characterised by** the fact that four expanding shanks (2-9) are present so that the plug longitudinal slots (9-12) running between them together form a cross-shaped hollow cross-section.

## Revendications

1. Cheville à expansion en matière plastique comprenant au moins trois branches d'expansion (2-5) reliées à la douille de cheville sur leurs deux extrémités et incluant respectivement entre elles une fente longitudinale (9-12), **caractérisée en ce que** les fentes longitudinales (9-12) et en correspondance les arêtes longitudinales des branches d'expansion (2-5) s'étendent en forme de zigzag et **en ce qu'**au moins deux des branches d'expansion (3, 5) présentent sur leur côté extérieur des rangées d'évidements (13-21) qui sont limités à l'opposé des arêtes longitudinales par un bord formé comme nervure angulaire (26, 27) dirigée vers l'extérieur, sachant que les évidements adjacents dans la direction circonférentielle (13-17, 18-21) de la branche d'expansion respective (3, 5) sont agencés avec décalage l'un par rapport à l'autre dans la direction longitudinale de la cheville à expansion (1).

2. Cheville à expansion selon la revendication 1, **caractérisée en ce que** les évidements (13-17, 18-21) se suivant consécutivement dans la direction longitudinale de la cheville à expansion (1) incluent entre eux une barrette (22, 23) dont l'arête longitudinale vive (24, 25) limite un évidement (13-21) adjacent dans la direction circonférentielle.

3. Cheville à expansion selon l'une ou l'autre des revendications 1 et 2, **caractérisée en ce qu'**une branche d'expansion plus étroite (2, 4), profilée moins en profondeur sur son côté extérieur ou lisse sur l'extérieur, est agencée respectivement entre deux branches d'expansion plus larges (3, 5), agencées diamétralement l'une par rapport à l'autre et présentant des évidements (13-21).

4. Cheville à expansion selon l'une des revendications 1 à 3, **caractérisée en ce qu'**un rehaussement en forme de talon (32), dirigé vers l'extrémité arrière de la cheville et formant un gradin est prévu respectivement sur les branches d'expansion plus larges (3, 5).

5. Cheville à expansion selon l'une des revendications 1 à 4, **caractérisée en ce qu'**au moins une nervure d'engagement (34) s'étendant dans la direction longitudinale de la cheville et formant une arête sur l'extérieur est conformée sur le côté extérieur der rehaussement en forme de talon (32).

6. Cheville à expansion selon l'une des revendications 1 à 5, **caractérisée en ce qu'**une nervure d'engagement (29) s'étendant respectivement dans la direction longitudinale de la cheville et destinée à l'entaille de filetage d'une vis est prévue sur le côté intérieur des branches d'expansion (2-5).

7. Cheville à expansion selon l'une des revendications 1 à 6, **caractérisée en ce qu'**une pièce taraudée (35) destinée à l'engagement dans le filetage d'une vis est agencée sur la paroi intérieure de la cheville (1) entre la nervure d'engagement (29) d'au moins une des branches d'expansion et l'extrémité de cheville arrière formant une bride (31).

8. Cheville à expansion selon l'une des revendications 1 à 7, **caractérisée en ce que** des barrettes (22, 23) décalées respectivement l'une par rapport à l'autre en sens transversal, sans vides et se suivant consécutivement, et les bords à la manière de nervures (26, 27) des évidements (13-21), ainsi que des branches d'expansion (2, 4) essentiellement lisses à l'extérieur et plus étroites présentent une surface enveloppe commune, cylindrique, légèrement conique ou bombée qui facilite l'insertion de la cheville à expansion (1) dans un trou de réception.

9. Cheville à expansion selon la revendication 6, **caractérisée en ce que** les branches d'expansion (2-5) forment, en raison d'une section transversale angulaire des nervures d'engagement (29), une section transversale globale en forme de secteur de cercle avec lesdites nervures.

10. Cheville à expansion selon la revendication 9, **caractérisée en ce que** quatre branches d'expansion (2-9) sont présentes de telle sorte les fentes longitudinales de cheville (9-12) s'étendant entre elles forment une section transversale creuse en forme de croix.
